# DEMANDE DE BREVET EUROPEEN

(11) **EP 0 737 830 A1**
(43) Date de publication de la demande: **16.10.1996**
(21) Numéro de dépôt: 96400750.4
(22) Date de dépôt: 05.04.1996
(51) Int. Cl.: F16J 15/06, F16J 15/10

(54) **Joint et son procédé de montage**

(30) Priorité: 13.04.1995 FR 9504445
(71) Demandeur: LE JOINT FRANCAIS SNC, 75008 Paris (FR)
(72) Inventeur: Voirol, Bernard, 95240 Cormeilles en Parisis (FR); Travers, Thierry, 53200 Chateau-Gontier (FR); Cochin, Didier, 92140 Clamart (FR)
(74) Mandataire: Hurwic, Aleksander

(57) **Abrégé**

La présente invention se rapporte principalement à un joint d'étanchéité et à son procédé de montage dans une gorge.

Selon la présente invention, on vrille le joint avant le montage dans la gorge, de manière à ce que les forces de réaction en assurent le maintien .

Le maintien selon la présente invention est amélioré pour des joints dont la section comporte une excroissance dirigée vers une paroi d'appui radiale de la gorge.

La présente invention s'applique plus particulièrement à l'industrie mécanique, l'industrie automobile, l'industrie aéronautique.

Le joint selon la présente invention peut être mis en oeuvre notamment au niveau des collecteurs de turbocompresseurs, aux collecteurs d'arrivée ou de sortie d'air, notamment en matière plastique, utilisés dans l'industrie automobile.

## Description

La présente invention se rapporte principalement à un joint d'étanchéité et à son procédé de montage dans une gorge.

L'étanchéité au niveau des ouvertures débouchant à la surface d'une pièce est communément assurée par un joint torique logé dans une gorge ménagée dans la pièce et entourant l'ouverture coopérant avec un couvercle ou un élément de passage de fluide.

La section axiale généralement rectangulaire des gorges ne permet pas de garantir systématiquement le maintien provisoire du joint torique dans l'attente du montage du couvercle ou de l'élément de passage de fluide.

Divers moyens de maintien provisoire du joint dans la gorge ont été proposés.

Des gorges à section trapézoïdale dont l'ouverture est inférieure au diamètre du joint torique en assurent le maintien provisoire. Toutefois, la réalisation d'une telle gorge n'est pas possible par moulage, alors que les difficultés de la réalisation d'une telle gorge par usinage en augmentent le prix. Le collage du joint par l'utilisateur n'est pas acceptable dans la mesure où la colle risque de détériorer le matériau du joint, typiquement du caoutchouc, de former des points durs risquant de compromettre l'étanchéité tout en augmentant le coût du montage du joint.

Les fabricants de joints peuvent, au prix d'une majoration du coût du joint non négligeable, coller le joint au fond de la gorge.

Des bossages régulièrement répartis diminuant ponctuellement la largeur de la gorge sont difficiles à réaliser et présentent l'inconvénient de former des zones de striction du joint préjudiciable au maintien à long terme de l'étanchéité.

C'est par conséquent un but de la présente invention d'assurer le maintien provisoire d'un joint dans une gorge dans l'attente du montage d'un couvercle ou d'un élément de passage de fluide.

C'est également un but de la présente invention d'assurer une parfaite étanchéité lors du montage du couvercle ou de l'élément de passage de fluide.

C'est aussi un but de la présente invention de limiter le coût du maintien provisoire du joint.

Ces buts sont assurés selon la présente invention en vrillant le joint avant le montage dans la gorge, de manière à ce que les forces de réaction en assurent le maintien.

Le maintien selon la présente invention est amélioré pour des joints dont la section comporte une excroissance dirigée vers une paroi d'appui radiale de la gorge.

L'invention a principalement pour objet un joint d'étanchéité ayant une forme de révolution autour d'un axe, caractérisé en ce que sa section en coupe axiale est limitée, de chaque côté de l'axe, par un demi-cercle prolongé radialement par une excroissance ayant la forme d'une demi-ellipse accolée par son petit axe au diamètre du demi-cercle dont la longueur est supérieure au rayon du demi-cercle.

L'invention a également pour objet un joint, caractérisé en ce que le diamètre du demi-cercle et la longueur du demi-axe de la mi-ellipse sont égaux.

L'invention a également pour objet un joint, caractérisé en ce que l'excroissance est dirigé radialement vers l'intérieur du joint.

L'invention a également pour objet un joint, caractérisé en ce que l'excroissance est dirigée radialement vers l'extérieur du joint.

L'invention a également pour objet un joint, caractérisé en ce qu'il est réalisé en élastomère, notamment en caoutchouc.

L'invention a également pour objet une pièce comportant une ouverture entourée par une gorge, caractérisée en ce que la gorge est munie d'un joint élastique vrillé maintenu dans la gorge par les couples de force de rappel élastique du joint.

L'invention a également pour objet une pièce, caractérisée en ce que le joint est vrillé symétriquement dans des zones diamétralement opposées.

L'invention a également pour objet une pièce, caractérisée en ce que le joint est un joint selon l'invention.

L'invention a également pour objet un procédé de mise en place d'un joint dans une gorge, caractérisé en ce qu'il comporte les étapes consistant à :
a) vriller le joint ;
b) déposer le joint dans la gorge de manière à ce que les couples de rappel élastique du joint assurent son maintien dans la gorge.

L'invention a également pour objet un procédé, caractérisé en ce que le joint est un joint selon l'invention, et en ce qu'on vrille deux zones diamétralement opposées du joint, de manière à diriger l'excroissance du joint vers le fond de la gorge.

L'invention sera mieux comprise au moyen de la description ci-après et des figures annexées données comme des exemples non limitatifs et sur lesquelles :
- la figure 1 est une vue en coupe longitudinale d'un joint d'étanchéité selon la présente invention disposé entre une pièce et un couvercle ;
- la figure 2 est une vue en coupe longitudinale d'un joint selon la présente invention disposé entre une pièce et un élément de passage de fluide ;
- la figure 3 est une vue en coupe longitudinale illustrant un joint selon la présente invention travaillant en extension radiale dans une gorge ;
- la figure 4 est une vue en coupe longitudinale illustrant un joint selon la présente invention travaillant en compression radiale dans une gorge ;
- la figure 5 est une vue schématique illustrant la déformation que l'on applique à un joint selon la présente invention avant sa mise en place dans une gorge ;
- la figure 6 est une coupe longitudinale illustrant le joint de la figure 5 disposé dans la gorge ;
- la figure 7 est une vue en coupe longitudinale d'un dispositif de mise en place automatique de joint des figures 5 et 6.

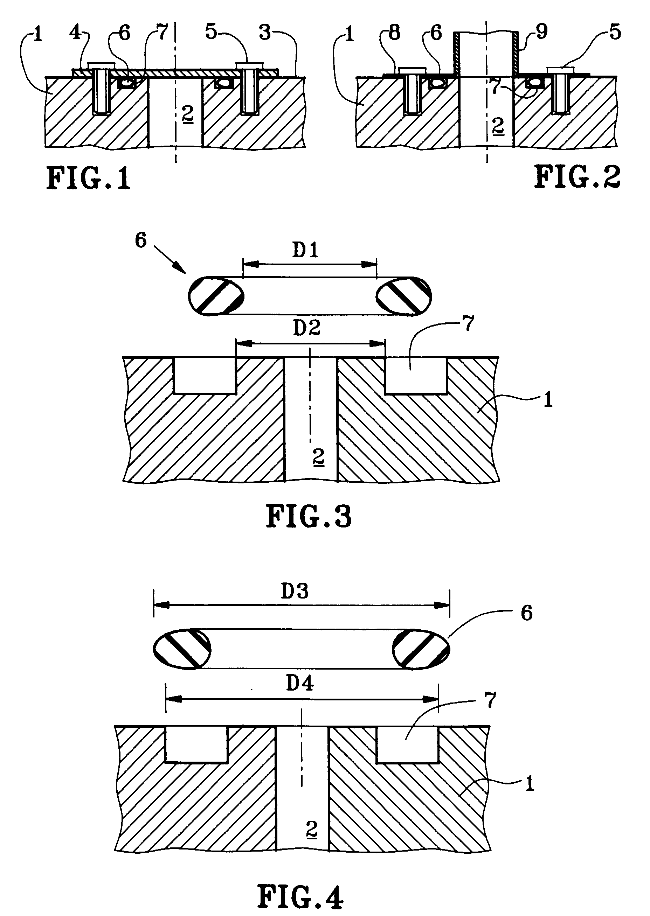

Sur la figure 1, on peut voir une pièce 1, comportant une ouverture 2 débouchant sur sa surface externe 3, scellée par un couvercle 4 maintenu par des vis 5. Un joint 6 disposé dans une gorge 7 de section rectangulaire assure l'étanchéité entre le couvercle 4 et l'ouverture 2. Dans une variante non représentée, la gorge 7 est ménagée dans le couvercle 4.

Sur la figure 2, on peut voir une bride 8 formant un élément de passage de fluide solidarisé avec une conduite tubulaire 9 disposée en vis-à-vis de l'ouverture 2 de la pièce 1. La bride 8 est solidarisée par exemple avec des vis 5 avec la pièce 1. Un joint 6 disposé dans une gorge 7 ménagée dans la face externe 3 de la pièce 1 et entourant l'ouverture 2 assure l'étanchéité de l'assemblage de la bride 8 sur la pièce 1. Les vis 5 assurent le serrage axial du joint 6.

Il est bien entendu que la gorge 7 de réception du joint 6 peut être ménagée dans l'élément de passage de fluide, notamment dans la bride 8 sans sortir du cadre de la présente invention.

Sur la figure 3, on peut voir un exemple avantageux de réalisation d'un joint 6 selon la présente invention ayant un diamètre interne D1 destiné à être logé dans une gorge de réception 7 de section rectangulaire ayant un diamètre interne D2 supérieur à D1.

Avantageusement, le joint 6 présente une section allongée radialement dans la direction de la paroi radiale d'appui de la gorge 7. La section allongée radialement peut être, par exemple, ovale ou comporter une pointe éventuellement arrondie à son sommet. Avantageusement, la section radiale du joint est délimitée par un demi-cercle dont le diamètre est accolé au petit axe d'une demi-ellipse, le diamètre du demi-cercle étant égal à la longueur du petit axe de la demi-ellipse.

Dans l'exemple illustré sur la figure 3, dans lequel le joint 6 est disposé en extension dans une gorge circulaire de section rectangulaire, la demi-ellipse est dirigée vers l'intérieur et le diamètre D1 du joint 6 est inférieur au diamètre D2 de la paroi radiale interne de la gorge 7. Au contraire, dans l'exemple de réalisation illustré sur la figure 4, la demi-ellipse est dirigée vers l'extérieur de manière à ce que le diamètre externe D3 du joint 6 soit supérieur au diamètre D4 de la paroi radiale externe de la gorge 7. Il est bien entendu que la mise en oeuvre de joints 6 ayant une forme différente, notamment des joints présentant une excroissance radiale différente, le joint à section elliptique et même le joint torique, ne sort pas du cadre de la présente invention. L'excroissance radiale du joint présente une longueur par exemple égale entre 1,2 et 1,6 fois le rayon de la partie circulaire du joint. Par exemple, pour un joint présentant une épaisseur de 2 mm, l'extension radiale du joint est par exemple égale à 2,6 mm. Le joint 6 est réalisé en un matériau élastique, par exemple en élastomère et/ou en plastomère. Avantageusement, l'élastomère a une dureté comprise entre 55 Shore A et 90 Shore A, de préférence entre 60 Shore A et 80 Shore A, par exemple égale à 70 Shore A ou 80 Shore A .

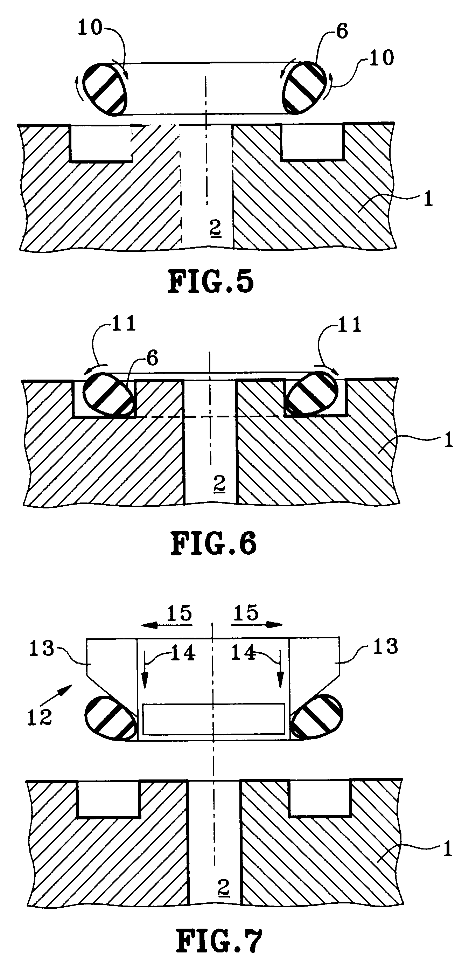

Selon la présente invention, comme illustré sur la figure 5, le joint 6 est vrillé selon les flèches 10 de manière à diriger la protubérance du joint vers le fond de la gorge 7. Ainsi, lorsqu'on fait pénétrer le joint 6 dans la gorge 7, comme illustré sur la figure 6, deux couples de force élastique symbolisés par les flèches 11 rappellent le joint 6 vers le fond de la gorge 7. La vrille 10 du joint 6 est par exemple comprise entre 15 et 90°, de préférence entre 20 et 60°, étant par exemple égale à 30 ou 45°.

Sur la figure 7, on peut voir une machine 12 de dépose de joint 6 selon l'invention dans des gorges 7. La machine 12 comporte deux mâchoires 13 diamétralement opposées dont le mouvement radial selon les flèches 15 assure l'extension radiale du joint 6 au moins jusqu'à un diamètre interne égal à D2 et un mouvement axial selon la flèche 14 permettant de vriller le joint selon les flèches 10 de la figure 5.

Une machine analogue non illustrée permet la pose de joints de la figure 4.

La présente invention s'applique à toute industrie mettant en oeuvre des joints d'étanchéité notamment aux industries mettant actuellement en oeuvre des joints toriques.

La présente invention s'applique plus particulièrement à l'industrie mécanique, l'industrie automobile, l'industrie aéronautique.

Le joint selon la présente invention peut être mis en oeuvre notamment au niveau des collecteurs de turbocompresseurs compresseurs, aux collecteurs d'arrivée ou de sortie d'air, notamment en matière plastique, utilisés dans l'industrie automobile.

## Revendications

1. Joint d'étanchéité ayant une forme de révolution autour d'un axe, caractérisé en ce que sa section en coupe axiale est limitée, de chaque côté de l'axe, par un demi-cercle prolongé radialement par une excroissance ayant la forme d'une demi-ellipse accolée par son petit axe au diamètre du demi-cercle dont la longueur est supérieure au rayon du demi-cercle.

2. Joint selon la revendication 1, caractérisé en ce que le diamètre du demi-cercle et la longueur du demi-axe de la mi-ellipse sont égaux.

3. Joint selon la revendication 1 ou 2, caractérisé en ce que l'excroissance est dirigé radialement vers l'intérieur du joint.

4. Joint selon la revendication 1 ou 2, caractérisé en ce que l'excroissance est dirigée radialement vers l'extérieur du joint.

5. Joint selon l'une quelconque des revendications précédentes, caractérisé en ce qu'il est réalisé en élastomère, notamment en caoutchouc.

6. Pièce comportant une ouverture (2) entourée par une gorge (7), caractérisée en ce que la gorge (7) est munie d'un joint élastique (6) vrillé maintenu dans la gorge par les couples de force de rappel élastique du joint.

7. Pièce selon la revendication 6, caractérisée en ce que le joint est vrillé symétriquement dans des zones diamétralement opposées.

8. Pièce selon la revendication 6 ou 7, caractérisée en ce que le joint est un joint selon l'une quelconque des revendications 1 à 5.

9. Procédé de mise en place d'un joint dans une gorge, caractérisé en ce qu'il comporte les étapes consistant à :
a) vriller le joint ;
b) déposer le joint dans la gorge de manière à ce que les couples de rappel élastique du joint assurent son maintien dans la gorge.

10. Procédé selon la revendication 9, caractérisé en ce que le joint est un joint selon l'une quelconque des revendications 1 à 5, et en ce qu'on vrille deux zones diamétralement opposées du joint, de manière à diriger l'excroissance du joint vers le fond de la gorge (7).
